# EUROPÄISCHE PATENTSCHRIFT

(11) **EP 3 153 667 B1**
(45) Veröffentlichungstag und Bekanntmachung des Hinweises auf die Patenterteilung: **15.05.2019**
(21) Anmeldenummer: 16192668.8
(22) Anmeldetag: 06.10.2016
(51) Int. Cl.: F01D 5/30, F01D 5/32

(54) **SICHERUNGSVORRICHTUNG ZUR AXIALEN SICHERUNG EINER LAUFSCHAUFEL UND ROTORVORRICHTUNG MIT EINER DERARTIGEN SICHERUNGSVORRICHTUNG**
SECURING DEVICE FOR AXIAL SECURING OF A MOVING BLADE AND ROTOR DEVICE WITH SUCH A SECURING DEVICE
DISPOSITIF DE SÉCURISATION AXIALE D'UNE AUBE MOBILE ET DISPOSITIF DE ROTOR ÉQUIPÉ D'UNE TELLE SÉCURISATION

(30) Priorität: 06.10.2015 DE 102015116935
(43) Veröffentlichungstag der Anmeldung: 12.04.2017
(73) Patentinhaber: Rolls-Royce Deutschland Ltd & Co KG, 15827 Blankenfelde-Mahlow (DE)
(72) Erfinder: Schießl, Thomas, 15834 Rangsdorf (DE); Weinert, Markus, 15834 Rangsdorf (DE)
(74) Vertreter: Kronthaler, Wolfgang N.K.

(56) Entgegenhaltungen:
- US-A- 4 086 757
- US-A- 4 890 981
- US-A- 5 622 475
- US-A1- 2008 181 767

## Beschreibung

Die Erfindung betrifft eine Sicherungsvorrichtung mit mehreren Sicherungssegmenten zur axialen Sicherung wenigstens einer Laufschaufel an einem Scheibenrad einer Rotorvorrichtung einer Strömungsmaschine gemäß der im Oberbegriff des Patentanspruchs 1 näher definierten Art und eine Rotorvorrichtung gemäß der im Oberbegriff des Patentanspruchs 7 näher definierten Art.

Aus der Praxis sind Rotorvorrichtungen von als Strahltriebwerken ausgeführten Strömungsmaschinen bekannt, die mit Scheibenrädern und damit umfangsseitig verbundenen Laufschaufeln ausgeführt sind. Die Laufschaufeln weisen im Querschnitt tannenbaumförmig oder schwalbenschwanzförmig ausgeführte Schaufelfüße auf, über die die Laufschaufeln in in axialer Richtung in dem Scheibenrad verlaufenden Aufnahmenuten angeordnet sind. Zur axialen Sicherung der Laufschaufeln an dem Scheibenrad sind Sicherungsringe bekannt, die mehrere Sicherungssegmente aufweisen. Die Sicherungssegmente werden in einem radial inneren Bereich in Nuten des Scheibenrads und in einem radial äußeren Bereich in Nuten der Laufschaufeln angeordnet, wobei die Sicherungssegmente jeweils in Umfangsrichtung der Rotorvorrichtungen nebeneinander angeordnet sind und jeweils mit seitlichen Stirnflächen miteinander zusammenwirken.

Im Betrieb des Strahltriebwerks werden die Sicherungssegmente durch die aufgrund der Rotation der Rotorvorrichtung auf sie wirkenden Fliehkräfte in radialer Richtung nach außen gedrückt, wobei die Sicherungssegmente sich im Bereich der Nuten der Laufschaufeln an diesen abstützen. Im Bereich der Laufschaufeln treten hierbei Spannungen insbesondere im Bereich des Nutgrunds auf. Zusätzlich stützen die Laufschaufeln diese Kräfte wiederum im Bereich der Schaufelfüße an dem Scheibenrad ab. Um diese Kräfte aufnehmen zu können, müssen die Schaufelfüße und das Scheibenrad nachteilhafterweise z. B. mit einer großen Länge in axialer Richtung der Rotorvorrichtung ausgeführt werden. Hieraus resultiert wiederum ein entsprechend großes Gewicht dieser Rotorvorrichtungen.

Es sind aus der Praxis weiterhin Sicherungsringe bekannt, die als Vollringe ausgeführt sind und somit in Umfangsrichtung der Rotorvorrichtung komplett umlaufend ausgebildet sind. Zur Montage eines solchen Vollrings wird zunächst beispielsweise ein Sprengring bzw. Kolbenring in einer Nut des Scheibenrad angeordnet, und anschließend wird der bereits mit den Laufschaufeln in Wirkverbindung gebrachte Vollring in axialer Richtung der Rotorvorrichtung über den Sprengring bzw. Kolbenring in die Nut eingebracht. Im Betrieb des Strahltriebwerks stützt sich der Vollring in radialer Richtung an dem Scheibenrad ab, so dass gegenüber der oben näher beschriebenen Segmentlösung geringere Kräfte von den Schaufelfüßen der Laufschaufeln zu tragen sind und diese somit in axialer Richtung kürzer ausgeführt werden können.

Allerdings hat eine derartige Lösung den Nachteil, dass der Vollring einerseits durch die großen im Betrieb des Strahltriebwerks auftretenden Temperaturen und andererseits durch einen großen Temperaturgradienten zwischen dem radial inneren Bereich und dem radial äußeren Bereich des Vollrings stark belastet wird. Hierbei können in dem Vollring Materialspannungen auftreten, welche bis hin zu einem Bruch des Vollrings führen können, da der Vollring im Unterschied zu einer Segmentlösung auch Umfangsspannungen überträgt und sich in Umfangsrichtung nicht ausdehnen kann. Als Vollringe ausgeführte Sicherungsringe sind daher nachteilhafterweise lediglich bei geringen im Betrieb auftretenden Temperaturen bzw. Temperaturgradienten einsetzbar oder bedürfen einer besonderen Kühlung oder Begrenzungen des Bauraums.

Aus der Praxis sind weiterhin Axialsicherungen bekannt, die in einem radial inneren Bereich mit einem Vollring ausgeführt sind, der in oben näher beschriebener Weise über einen Sprengring bzw. einen Kolbenring in einer Nut des Scheibenrads angeordnet ist. In radialer Richtung der Rotorvorrichtung außenseitig des Vollrings sind eine Vielzahl von mit dem Vollring zusammenwirkenden Sicherungssegmenten vorgesehen, die jeweils mit einer oder mehreren Laufschaufeln über eine Nut zusammenwirken. Da ein derartiger Vollring eine geringere Erstreckung in radialer Richtung der Rotorvorrichtung als der oben näher beschriebene Vollring aufweist, liegt im Bereich des Vollrings im Betrieb der Rotorvorrichtung ein kleinerer Temperaturgradient vor, so dass diese Ausführung auch bei Anwendungsfällen einsetzbar ist, bei denen der oben näher beschriebene Vollring nicht mehr verwendet werden kann.

Allerdings stützen sich bei dieser Ausführung im Betrieb der Rotorvorrichtung wiederum die Sicherungssegmente an den Laufschaufeln ab, so dass die im Betrieb des Strahltriebwerks wirkenden Fliehkräfte durch ein nachteilhafterweise groß dimensioniertes Scheibenrad und entsprechend groß ausgeführte Schaufelfüße aufgenommen werden müssen, wobei die Fliehkräfte aufgrund der geringeren Masse dieser Sicherungssegmente gegenüber der erstgenannten Ausführung lediglich mit Sicherungssegmenten geringer sind.

Weiterhin hat diese Lösung mit Vollring und Sicherungssegmenten den Nachteil, dass durch den erforderlichen Verbindungsbereich der Sicherungssegmente mit dem Vollring Kräfte zuverlässig nur in einer axialen Richtung der Rotorvorrichtung aufgenommen werden können, so dass auf einer weiteren axialen Seite des Scheibenrads und der Laufschaufeln ebenfalls ein Sicherungsring oder anderweitige konstruktive Lösungen zur Axialsicherung der Schaufeln vorzusehen sind. Hieraus folgen eine höhere Komplexität, zusätzliche Kosten und ein erhöhtes Gewicht.

Die US 6 622 475 A zeigt eine Sicherungsvorrichtung für eine Laufschaufel an einer Rotorscheibe, welche als ein Vollring ausgeführt ist und keine Sicherung der Laufschaufel in beide axiale Richtungen vorsieht.

Die US 4 086 757 A offenbart eine Sicherungsvorrichtung für Laufschaufeln mit zwei axialen Sicherungen, von denen eine erste Retainer Plate 44 in Strömungsrichtung vor der Laufschaufel und die zweite Retainer Plate 45 stromab der Laufschaufel angeordnet ist.

In der US 4 890 981 A ist ebenfalls eine Rückhalteeinrichtung zur Verhinderung einer axialen Vorwärtsbewegung einer Laufschaufel gegenüber einer Rotorscheibe beschrieben, welche nur in eine axiale Richtung wirkt.

Die US 2008/181767 A1 zeigt eine Dichtplatte zwischen einer Rotorscheibe und Laufschaufeln, welche mangels eines substantiellen Abstützbereiches an der Laufschaufel eine unerwünscht hohe Elastizität bei der axialen Sicherung der Laufschaufel zulässt.

Der vorliegenden Erfindung liegt daher die Aufgabe zugrunde, eine Sicherungsvorrichtung zur axialen Sicherung wenigstens einer Laufschaufel an einem Scheibenrad einer Rotorvorrichtung sowie eine Rotorvorrichtung zur Verfügung zu stellen, welche eine geringe Komplexität aufweisen, wobei eine die Sicherungsvorrichtung aufweisende Rotorvorrichtung ein geringes Gewicht aufweist und mit einer gewünscht langen Lebensdauer betreibbar ist.

Erfindungsgemäß wird diese Aufgabe mit einer Sicherungsvorrichtung mit den Merkmalen des Patentanspruches 1 bzw. einer Rotorvorrichtung mit den Merkmalen des Patentanspruches 7 gelöst.

Es wird eine Sicherungsvorrichtung zur axialen Sicherung wenigstens einer Laufschaufel an einem Scheibenrad einer Rotorvorrichtung einer Strömungsmaschine mit mehreren in montiertem Zustand in axialer Richtung der Rotorvorrichtung in und entgegen einer Strömungsrichtung eines Arbeitsgases sichernden Sicherungssegmenten vorgeschlagen, wobei die Sicherungsvorrichtung wenigstens eine in einem radial inneren Bereich angeordnete Wirkfläche, die in montiertem Zustand zum Zusammenwirken mit dem Scheibenrad in axialer Richtung der Rotorvorrichtung ausgeführt ist, aufweist, und wobei wenigstens ein Sicherungssegment eine zusätzliche Wirkfläche aufweist, die in montiertem Zustand der Sicherungsvorrichtung zum Zusammenwirken mit dem Scheibenrad in radialer Richtung der Rotorvorrichtung ausgeführt ist. Weiterhin weist das wenigstens eine Sicherungssegment einen Abstützbereich auf, der in montiertem Zustand zum Zusammenwirken mit einer Laufschaufel der Rotorvorrichtung ausgeführt ist. Erfindungsgemäß ist eine weitere in einem radial äußeren Bereich an einem Sicherungssegment angeordnete Wirkfläche vorgesehen, die in montiertem Zustand zum Zusammenwirken mit wenigstens einer Laufschaufel in axialer Richtung der Rotorvorrichtung gegen eine Bewegung der Laufschaufel an dem Scheibenrad entgegen der Strömungsrichtung ausgeführt ist.

Eine erfindungsgemäße Sicherungsvorrichtung, die vorzugsweise bei einer Turbine, beispielsweise einer Nieder-, Mittel- oder Hochdruckturbine einer als Strahltriebwerk oder stationäre Gasturbine ausgeführten Strömungsmaschine eingesetzt werden kann, hat den Vorteil, dass die im Betrieb der Rotorvorrichtung auf die Sicherungssegmente wirkenden Fliehkräfte über die zusätzliche Wirkfläche an dem Scheibenrad abstützbar sind, so dass ein in radialer Richtung äußerer Bereich der Sicherungssegmente sich im Betrieb der Rotorvorrichtung nicht an den Laufschaufeln abstützt, und ein Anbindungsbereich der Laufschaufeln an dem Scheibenrad diese Kräfte nicht aufnehmen muss. Zudem können mit der erfindungsgemäßen Sicherungsvorrichtung hierdurch Spannungen im Bereich der Laufschaufeln durch direkte Lasteinleitung in die Scheibe verhindert werden.

Die Laufschaufeln und das Scheibenrad können weiterhin in ihrem Anbindungsbereich in axialer Richtung der Rotorvorrichtung vorteilhaft klein dimensioniert werden, so dass eine mit der erfindungsgemäßen Sicherungsvorrichtung ausgeführte Rotorvorrichtung insgesamt ein geringes Gewicht aufweisen kann.

Gleichzeitig weist die erfindungsgemäße Sicherungsvorrichtung eine gute Temperaturbeständigkeit auf. Im Betrieb einer mit der erfindungsgemäßen Sicherungsvorrichtung ausgeführten Strömungsmaschine liegt ein großer Temperaturgradient mit großen Temperaturunterschieden in einem radial inneren Bereich gegenüber einem radial äußeren Bereich der Sicherungsvorrichtung vor. Aufgrund der Ausführung der Sicherungsvorrichtung mit mehreren - beispielsweise vier bis beispielsweise zwanzig - Sicherungssegmenten können diese Temperaturunterschiede über eine unterschiedliche Ausdehnung der Sicherungssegmente in Umfangsrichtung in dem radial inneren Bereich und dem radial äußeren Bereich ausgeglichen werden. Die Gefahr einer Beschädigung der Sicherungsvorrichtung aufgrund von thermischen Spannungen ist somit vorteilhafterweise auch bei einem großen Temperaturgradienten gering, so dass die erfindungsgemäße Sicherungsvorrichtung eine vorteilhafterweise große Lebensdauer aufweist.

Um in montiertem Zustand der Sicherungsvorrichtung einen definierten Anlagebereich zwischen den Laufschaufeln und den Sicherungssegmenten zu schaffen, weist das wenigstens eine Sicherungssegment einen Abstützbereich auf, der in montiertem Zustand zum Zusammenwirken mit einer Laufschaufel der Rotorvorrichtung ausgeführt ist.

Durch eine Anordnung des axialen Abstützbereichs in montiertem Zustand der Sicherungsvorrichtung in einem bezüglich der radialen Richtung der Rotorvorrichtung mittigen Bereich des Sicherungssegments kann dabei auf einfache Weise erreicht werden, dass ein bei einer Bewegung der Laufschaufel in die eine oder andere axiale Richtung wirkender Abstützhebel für eine Bewegung der Laufschaufel in beide axiale Richtungen etwa gleich groß ist.

Bei einer vorteilhaften Ausführung einer erfindungsgemäßen Sicherungsvorrichtung kann es vorgesehen sein, dass die zusätzliche Wirkfläche an dem wenigstens einen Sicherungssegment in montiertem Zustand der Sicherungsvorrichtung im Wesentlichen konzentrisch zu einer Mittelachse der Rotorvorrichtung bzw. der Sicherungsvorrichtung angeordnet ist. Hierdurch ist auf einfache Weise ein flächiges Zusammenwirken mit einer entsprechenden Fläche eines Scheibenrads der Rotorvorrichtung erzielbar, wobei eine gewünschte Flächenpressung zwischen diesen Flächen in montiertem Zustand der Sicherungsvorrichtung durch eine entsprechende Wahl der Erstreckung der zusätzlichen Wirkfläche in axialer Richtung der Rotorvorrichtung erzielbar ist.

Wenn die in axialer Richtung weisenden Wirkflächen in montiertem Zustand der Sicherungsvorrichtung im Wesentlichen parallel zu einer senkrecht zu einer Mittelachse der Rotorvorrichtung verlaufenden Ebene ausgebildet sind, ist eine Sicherung der Laufschaufeln an einem Scheibenrad in montiertem Zustand der Sicherungsvorrichtung durch eine günstige Krafteinleitung erzielbar.

Bei einer vorteilhaften Ausführung einer erfindungsgemäßen Sicherungsvorrichtung kann es weiterhin vorgesehen sein, dass diese ein Sicherungselement umfasst, das die in montiertem Zustand mit dem Scheibenrad in axialer Richtung zusammenwirkende Wirkfläche aufweist und in montiertem Zustand in radialer Richtung und/oder axialer Richtung der Rotorvorrichtung mit dem wenigstens einen zugeordneten Sicherungssegment zusammenwirkt.

Das Sicherungselement ermöglicht einerseits eine leichte Montage der Sicherungsvorrichtung und sichert andererseits die Sicherungssegmente bei stillstehender Rotorvorrichtung ohne Fliehkräfte entgegen einer Bewegung radial nach innen. Vorzugsweise wirkt das Sicherungselement über eine konzentrisch zu einer Rotorachse verlaufende Abstützfläche mit einer ebenfalls konzentrisch zu der Rotorachse verlaufenden Fläche der Sicherungssegmente und über eine senkrecht zu der Rotorachse angeordnete Abstützfläche mit einer in montiertem Zustand der Sicherungsvorrichtung hierzu parallelen Fläche der Sicherungssegmente zusammen. Die Wirkfläche kann hierbei Teil des beispielsweise als Sprengring oder als Kolbenring ausgeführten Sicherungselements sein.

Bei einer einfach zu montierenden Ausführung der erfindungsgemäßen Sicherungsvorrichtung weist das wenigstens eine Sicherungssegment in einem radial inneren Bereich einen sich in axialer Richtung erstreckenden hakenförmigen Bereich auf, wobei die in montiertem Zustand mit dem Scheibenrad in axialer Richtung zusammenwirkende Wirkfläche an einer Innenwandung des hakenförmigen Bereichs ausgebildet ist. Der hakenförmige Bereich kann damit zum Umgreifen eines Vorsprungs des Scheibenrads in montiertem Zustand der Sicherungsvorrichtung ausgeführt sein und insbesondere über eine Hinterschneidung mit dem Scheibenrad zusammenwirken. Derartig ausgeführte Sicherungssegmente können auf einfache Weise von radial innen mit einem Scheibenrad und den Laufschaufeln einer Rotorvorrichtung in Wirkverbindung gebracht werden.

Es wird weiterhin eine Rotorvorrichtung für eine Strömungsmaschine mit einem Scheibenrad und mehreren umfangsseitig verteilt an dem Scheibenrad angeordneten Laufschaufeln vorgeschlagen, wobei die Laufschaufeln jeweils über einen Schaufelfuß in im Wesentlichen axialer Richtung der Rotorvorrichtung verlaufenden Ausnehmungen des Scheibenrades angeordnet sind, und wobei zur axialen Sicherung der Laufschaufeln an dem Scheibenrad eine oben näher beschriebene Sicherungsvorrichtung mit mehreren umfangsseitig verteilt angeordneten Sicherungssegmenten vorgesehen ist.

Die Laufschaufeln und das Scheibenrad der erfindungsgemäßen Rotorvorrichtung sind in dem Verbindungsbereich aufgrund der Abstützung der Sicherungssegmente an dem Scheibenrad mit einer geringen axialen Länge ausführbar, so dass die Rotorvorrichtung durch ein geringes Gewicht und im Betrieb der Rotorvorrichtung geringe Spannungen im Bereich der Laufschaufel gekennzeichnet ist. Zudem weist die Rotorvorrichtung eine hohe Standzeit auf und kann auch bei Anwendungsfällen eingesetzt werden, bei denen in radialer Richtung einer Rotorachse große Temperaturgradienten auftreten, da sich die Sicherungssegmente bei hohen Temperaturen in Umfangsrichtung der Rotorachse ausdehnen können. Gegenüber herkömmlichen Rotorvorrichtungen, die einen mit Segmenten ausgeführten Sicherungsring aufweisen, kann die erfindungsgemäße Rotorvorrichtung mit einer geringen Anzahl an Sicherungssegmenten ausgeführt sein, da die im Betrieb wirkenden Fliehkräfte direkt an dem Scheibenrad wirken und nicht über Schaufelfüße der Laufschaufeln übertragen werden müssen.

Die Vermeidung von konstruktionsbedingten zusätzlichen radialen Lasten der Schaufelrückhaltevorrichtung bzw. Sicherungsvorrichtung und des Scheibenkopfdichtungssystems auf die Schaufel selbst ist ein ganz wesentlicher Vorteil der erfindungsgemäß ausgeführten Sicherungsvorrichtung und Rotorvorrichtung. Damit wird ein leichteres und effizienteres Design des Scheibenkopfes erreicht, was insbesondere bei zunehmenden Drehzahlen im Zuge der Effizienzverbesserung des Turbinenwirkungsgrades von großer Bedeutung ist. Besondere Wichtigkeit kann dies erlangen, wenn keramische Schaufelwerkstoffe Einzug in die konstruktive Praxis in Hochdruckturbinen halten, da diese die Möglichkeiten zur Aufnahme zusätzlicher Radiallasten durch die axiale Sicherungsvorrichtung noch weiter einschränken. Die Sicherungsvorrichtung und Rotorvorrichtung gemäß der Erfindung zeigen ein Design zur vollständigen Vermeidung von zusätzlichen Radiallasten auch an möglicherweise künftigen Hochdruckturbinen-Rotorvorrichtungen.

Die segmentierte Ausführung des Sicherungsvorrichtung hat zudem den großen Vorteil, dass hochtemperaturbeständige und hochbelastbare Nickel-Superlegierungen zum Einsatz gebracht werden können, da die Beschränkung von konventionellen Systemen auf Drehteile aus Schmiederohlingen entfallen kann. Dementsprechend können Fertigungsmethoden, die aus dem Schaufelbereich bekannt sind, wie z. B. Ein- oder Mehrkristallformenguss oder Metal-Injection-Moulding, Anwendung finden. Dies eröffnet zusätzlichen Freiraum bei der konstruktiven Gestaltung und Optimierung.

Es können beispielsweise zwischen vier und zwanzig Sicherungssegmente vorgesehen sein, wobei die Sicherungsvorrichtung vorzugsweise nur vier oder fünf Sicherungssegmente aufweist. Je geringer die Anzahl der Sicherungssegmente ist, desto weniger potentielle Leckagestellen zwischen in Umfangsrichtung der Rotorvorrichtung benachbarten Sicherungssegmenten mit entsprechend geringen Leckageströmen liegen vor.

Eine Erstreckung der Sicherungssegmente in Umfangsrichtung der Rotorvorrichtung kann dabei insbesondere derart gewählt sein, dass die Sicherungssegmente in montiertem Zustand entgegen einer Bewegung in radialer Richtung der Rotorvorrichtung nach innen gesichert sind und eine axiale Sicherungsfunktion zuverlässig erfüllt wird.

Bei einer vorteilhaften Ausführung der erfindungsgemäßen Rotorvorrichtung kann es vorgesehen sein, dass das Scheibenrad eine erste Abstützfläche und eine zweite Abstützfläche und die Laufschaufeln eine weitere Abstützfläche aufweisen, wobei die erste Abstützfläche des Scheibenrads mit wenigstens einer in axialer Richtung ausgerichteten Wirkfläche der Sicherungsvorrichtung, die zweite Abstützfläche mit der zusätzlichen in radialer Richtung ausgerichteten Wirkfläche der Sicherungssegmente und die weitere Abstützfläche mit der weiteren in axialer Richtung ausgerichteten Wirkfläche der Sicherungssegmente zusammenwirken. Sämtliche Abstützflächen und Wirkflächen, die in montiertem Zustand der Sicherungsvorrichtung die gleiche Orientierung zueinander aufweisen, liegen im Betrieb der Rotorvorrichtung insbesondere flächig aneinander an.

Bei einer vorteilhaften Gestaltung der Rotorvorrichtung weist das Scheibenrad eine Ausnehmung auf, in deren Bereich die erste Abstützfläche angeordnet ist. Die Ausnehmung ist vorzugsweise in einem radial inneren Bereich in axialer Richtung von einem Vorsprung begrenzt, der die erste Abstützfläche aufweist und der bei montierter Sicherungsvorrichtung insbesondere mit einem oben näher beschriebenen Sicherungselement zusammenwirkt.

Das Scheibenrad kann eine durch einen Vorsprung gebildete Nut aufweisen, die in radialer Richtung der Rotorvorrichtung nach innen geöffnet ist, wobei die erste Abstützfläche des Scheibenrads Teil der Nut ist, und wobei der Vorsprung insbesondere auch die zweite Abstützfläche aufweist. Hierdurch ist das Scheibenrad konstruktiv besonders einfach und gewichtsoptimiert ausgebildet.

Das in der Luftfahrttechnik als sicherheitsrelevantes Bauteil bzw. "critical part" eingestufte Scheibenrad kann mithin stark vereinfacht ausgeführt werden, wobei so genannte 3D-Features, wie z. B. Bajonettkonturen, welche stets aufwendig herzustellen und teils manuell zu entgraten sind und darüber hinaus in der Regel auch ein lebensdauerlimitierendes Merkmal des Scheibenrades darstellen, vermieden werden können.

Bei einer vorteilhaften Ausführung der erfindungsgemäßen Rotorvorrichtung umgreifen die Sicherungssegmente den Vorsprung des Scheibenrads, wobei die Sicherungssegmente hierzu insbesondere mit einem hakenförmigen Bereich in einem radial inneren Bereich ausgeführt sind. Derartige Sicherungssegmente sind auf einfache Weise montierbar, da diese bei bereits in den Ausnehmungen des Scheibenrads angeordneten Laufschaufeln von radial innen sowohl in Eingriff mit dem Scheibenrad als auch in Eingriff mit den Laufschaufeln bringbar sind. Insbesondere über einen Hinterschnitt der Sicherungssegmente mit dem Scheibenrad ist eine Verschiebung der Sicherungssegmente in axialer Richtung der Rotorvorrichtung gegenüber dem Scheibenrad sicher verhindert.

Die Sicherungssegmente der erfindungsgemäßen Rotorvorrichtung können in Umfangsrichtung der Rotorvorrichtung betrachtet im Wesentlichen zueinander parallel ausgeführte oder im Wesentlichen in radialer Richtung der Rotorvorrichtung verlaufende Seitenflächen aufweisen. Insbesondere werden zunächst Sicherungssegmente mit in radialer Richtung weisenden Seitenflächen montiert, wobei das letzte zu montierende Sicherungssegment parallel zueinander ausgeführte Seitenflächen aufweist, so dass dieses Sicherungssegment im Wesentlichen in Erstreckungsrichtung der Seitenflächen in Wirkverbindung mit zwei jeweils in Umfangsrichtung benachbarten Sicherungssegmenten bringbar ist.

Die Sicherungssegmente können derart ausgeführt sein, dass zwischen in Umfangsrichtung benachbarten Sicherungssegmenten in radialer Richtung der Rotorvorrichtung ein Abstand im Wesentlichen konstant ist oder V-förmig ausgeführt ist. Ein V-förmig ausgeführter Spalt hat den Vorteil, dass insbesondere in radialer Richtung der Rotorvorrichtung außen ein Abstand zwischen den benachbarten Sicherungssegmenten größer als in radialer Richtung der Rotorvorrichtung innen sein kann, so dass in dem radial äußeren Bereich, in dem im Betrieb der Rotorvorrichtung große Temperaturen bzw. Temperaturgradienten vorliegen, eine größere Ausdehnung der Sicherungssegmente möglich ist als in dem radial inneren Bereich. In dem in radialer Richtung inneren Bereich sind die Sicherungssegmente insbesondere derart ausgeführt, dass der Spalt einem durch Toleranzen vorgegebenen Minimalabstand entspricht.

Zusätzlich zur konstruktiven Auslegung auf minimale Spalte in Umfangsrichtung können die damit verbundenen Leckagen aus dem Sekundärluftsystem weiter minimiert werden, wenn die Seitenflächen wenigstens zweier benachbarter Segmente in einer sich im Spaltbereich axial überlappenden Bauart ausgeführt sind. Dabei kann eine Spaltüberlappung bei allen Sicherungssegmenten vorgesehen sein.

Bei einer vorteilhaften Ausführung einer erfindungsgemäßen Rotorvorrichtung ist wenigstens eine Halteeinrichtung zur Halterung eines oder mehrerer Sicherungssegmente in seiner bzw. ihrer Position in montiertem Zustand vorgesehen. Über die Halteeinrichtung, die beispielsweise als zu deformierender Draht oder Plättchen ausgeführt sein kann, kann auf einfache Weise verhindert werden, dass beispielsweise ein mit parallelen Seitenflächen ausgeführtes Sicherungssegment in einem nicht drehenden Betriebszustand der Rotorvorrichtung ohne Fliehkräfte in unerwünschter Weise in radialer Richtung der Rotorvorrichtung nach innen bewegt wird.

Um eine spielfreie Positionierung der Laufschaufeln gegenüber dem Scheibenrad sicherzustellen, kann wenigstens ein Sicherungssegment bei der Montage vorgespannt sein.

Sowohl die erfindungsgemäße Sicherungsvorrichtung als auch die erfindungsgemäße Rotorvorrichtung können beispielsweise bei als stationäre Gasturbinen oder als Strahltriebwerke ausgeführten Strömungsmaschinen eingesetzt werden und finden insbesondere bei beliebigen Stufen von Turbinen, beispielsweise Hochdruck-, Mitteldruck- oder Niederdruckturbinen, Anwendung. Weiterhin können die Sicherungsvorrichtung nach der Erfindung und auch die erfindungsgemäße Rotorvorrichtung beispielsweise auch bei einem Verdichter oder einem Bläser einer Strömungsmaschine zum Einsatz kommen.

Sowohl die in den Patentansprüchen angegebenen Merkmale als auch die in den nachfolgenden Ausführungsbeispielen der erfindungsgemäßen Sicherungsvorrichtung und Rotorvorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen einer erfindungsgemäßen Sicherungsvorrichtung und Rotorvorrichtung ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Strahltriebwerkes, welches eine Turbine mit mehreren Rotorvorrichtungen aufweist;
- Fig. 2: einen schematisierten Ausschnitt des Strahltriebwerks der Fig. 1 mit einer ein Scheibenrad und umfangsseitig daran angeordnete Laufschaufeln aufweisenden Rotorvorrichtung, wobei die Laufschaufeln jeweils in axialer Richtung mittels einer Sicherungsvorrichtung an dem Scheibenrad gesichert sind;
- Fig. 3: eine vereinfachte Darstellung eines vergrößerten Ausschnitts der Fig. 2, wobei die Sicherungsvorrichtung näher ersichtlich ist;
- Fig. 3a: eine der Fig. 3 entsprechende Darstellung einer im Prinzip gemäß der Ausführung in Fig. 3 ausgestalteten Sicherheitsvorrichtung an Laufschaufeln, welche mit einem eine Mikroturbine bildenden axialen Kühlluftauslass ausgebildet sind;
- Fig. 4: eine der Fig. 3 entsprechende Ansicht der Rotorvorrichtung gemäß Fig. 2, wobei eine zweite Ausführungsform einer Sicherungsvorrichtung ersichtlich ist;
- Fig. 4a: eine der Fig. 4 entsprechende Darstellung einer im Prinzip gemäß der Ausführung in Fig. 4 ausgestalteten Sicherheitsvorrichtung an Laufschaufeln, welche mit einem eine Mikroturbine bildenden axialen Kühlluftauslass ausgebildet sind;
- Fig. 5: eine stark vereinfacht gezeigte Ansicht eines Ausschnitts der Sicherungsvorrichtung gemäß Fig. 4, wobei eine Halteeinrichtung näher ersichtlich ist;
- Fig. 6: eine stark vereinfachte Ansicht der Sicherungsvorrichtung gemäß Fig. 4 von der Rückseite in Alleinstellung mit zahlreichen Sicherungssegmenten;
- Fig. 7: eine der Darstellung der Fig. 6 entsprechende Ansicht einer weiteren Ausführung der Sicherungsvorrichtung mit einer symbolisch angedeuteten Laufschaufel, wobei die Sicherungsvorrichtung in der Art eines Sprengrings mit einem Schlusssegment ausgeführt ist; und
- Fig. 8: die Seitenflächen zweier benachbarter Sicherungssegmente in Alleinstellung, wobei diese sich axial überlappend ausgeführt sind.

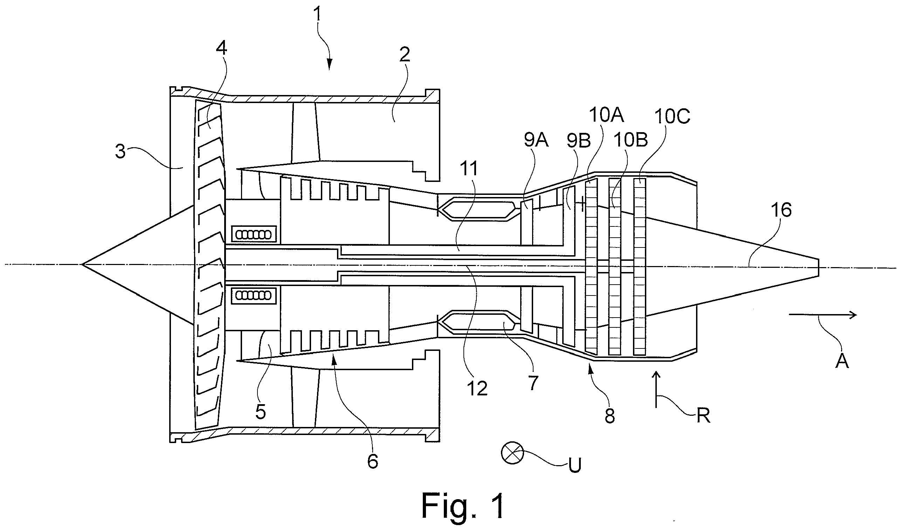

Die Fig. 1 zeigt eine als Strahltriebwerk 1 ausgeführte Strömungsmaschine in einer Längsschnittansicht, wobei das Strahltriebwerk 1 mit einem Nebenstromkanal 2 und einem Einlaufbereich 3 ausgebildet ist. An den Einlaufbereich 3 stromab schließt sich ein Bläser 4 in an sich bekannter Art und Weise an. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern bzw. Kernstromkanal 5 strömt, der wiederum in an sich üblicher Art und Weise mit einer Verdichtereinrichtung 6, einem Brenner 7 und einer Turbineneinrichtung 8 ausgeführt ist.

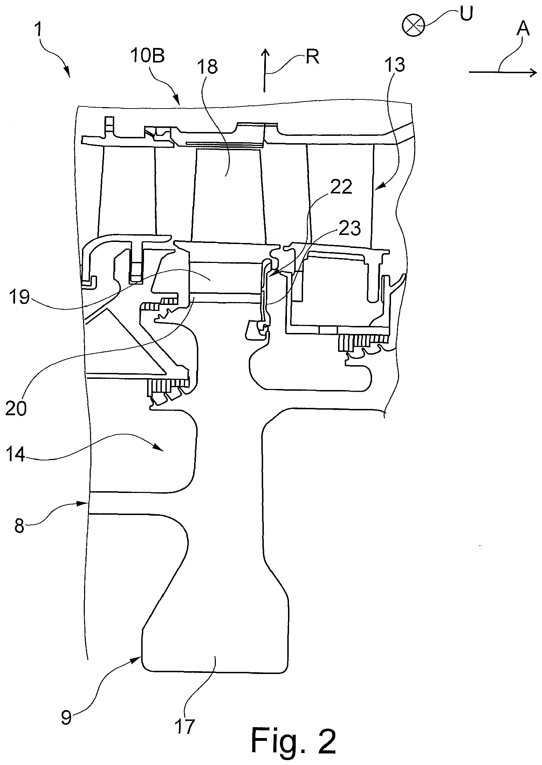

Die Turbineneinrichtung 8 ist vorliegend mehrstufig mit zwei Hochdruck-Rotorvorrichtungen 9A, 9B und drei im Wesentlichen vergleichbar aufgebauten Niederdruck-Rotorvorrichtungen 10A, 10B, 10C ausgeführt, von denen die Rotorvorrichtung 10B in der Fig. 2 näher ersichtlich ist.

Die Rotorvorrichtung 10B und eine in axialer Richtung A des Strahltriebwerks 1 stromab der Rotorvorrichtung 10B angeordnete Statorvorrichtung 13 bilden dabei eine zweite Stufe 14 der Turbineneinrichtung 8. Die Rotorvorrichtung 10B ist mit einem zentral angeordneten Scheibenrad 17 ausgeführt, das mit einer Triebwerkswelle 12 verbunden ist und um eine Zentralachse 16 drehbar gelagert ist. An dem Scheibenrad 17 sind in radial äußeren Bereichen umfangsseitig eine Vielzahl von Laufschaufeln 18 angeordnet, wobei die Laufschaufeln 18 hierzu jeweils einen hier nur schematisch ersichtlichen und mit einem sogenannten Tannenbaumprofil ausgebildeten Schaufelfuß 19 aufweisen, über den die Laufschaufeln 18 in bekannter Weise jeweils in im Wesentlichen in axialer Richtung in dem Scheibenrad 17 verlaufenden und mit den profilierten Schaufelfüßen 19 korrelierenden Ausnehmungen 20 des Scheibenrads 17 angeordnet sind.

Zur axialen Sicherung der Laufschaufeln 18 gegenüber dem Scheibenrad 17 ist vorliegend auf einer bezüglich einer Strömungsrichtung eines Arbeitsgases in dem Kernstromkanal 5 stromabgewandten Seite der Rotorvorrichtung 10B eine Sicherungsvorrichtung 22 vorgesehen, die mehrere, vorzugsweise etwa vier oder fünf im Wesentlichen baugleich ausgeführte Sicherungssegmente 23 aufweist. Die Strömungsrichtung des Arbeitsgases in dem Kernstromkanal entspricht dabei im Wesentlichen der axialen Richtung A des Strahltriebwerks 1.

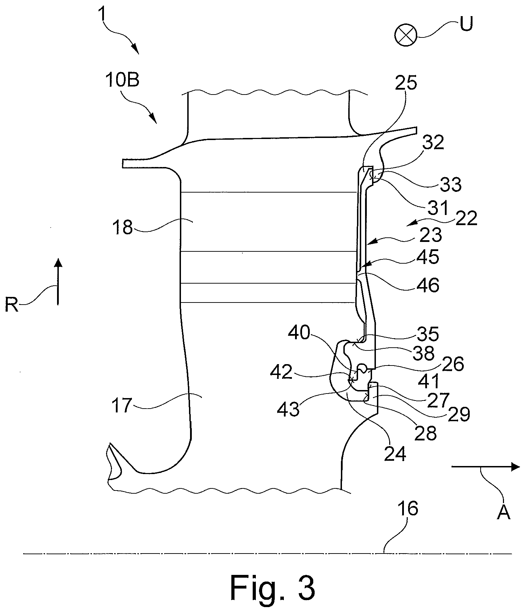

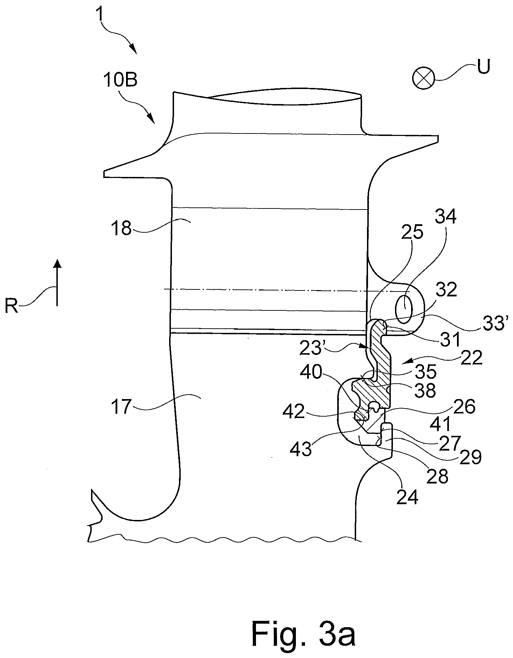

Die in Fig. 3 näher ersichtliche Sicherungsvorrichtung 22 ist in einem bezüglich einer radialen Richtung R des Strahltriebwerks 1 inneren Bereich in einer in Umfangsrichtung U des Strahltriebwerks 1 verlaufenden Ausnehmung 24 des Scheibenrads 17 und in einem bezüglich der radialen Richtung R des Strahltriebwerks 1 äußeren Bereich in einer in Umfangsrichtung U des Strahltriebwerks 1 verlaufenden Nut 25 der Laufschaufeln 18 angeordnet.

Im Bereich der Ausnehmung 24 des Scheibenrads 17 weist die Sicherungsvorrichtung 22 ein hier als Sprengring 26 ausgeführtes Sicherungselement auf, das mit einer im Wesentlichen senkrecht zu der axialen Richtung A des Strahltriebwerks 1 angeordneten Wirkfläche 27 ausgeführt ist, deren Oberfläche in Strömungsrichtung A gerichtet ist.

Über die Wirkfläche 27 wirkt der Sprengring 26 mit einer ebenfalls im Wesentlichen in einer Ebene senkrecht zu der axialen Richtung A des Strahltriebwerks 1 liegenden ersten Abstützfläche 28 des Scheibenrads 17 zusammen, die vorliegend Teil eines die Ausnehmung 24 zumindest bereichsweise in axialer Richtung A des Strahltriebwerks 1 begrenzenden, sich im Wesentlichen in radialer Richtung R des Strahltriebwerks 1 erstreckenden Vorsprungs 29 ist. Eine Oberfläche des die Abstützfläche 28 aufweisenden Teils des Vorsprungs 29 ist dabei entgegen der Strömungsrichtung A gerichtet.

In dem radial äußeren Bereich weist das Sicherungssegment 23 eine weitere Wirkfläche 31 auf, die wiederum im Wesentlichen in einer Ebene senkrecht zu der axialen Richtung A des Strahltriebwerks 1 liegt und stromabwärts ausgerichtet ist. Diese weitere Wirkfläche 31 ist zum Zusammenwirken mit einer weiteren Abstützfläche 32 vorgesehen, die Teil eines die Nut 25 in axialer Richtung A des Strahltriebwerks 1 begrenzenden und sich im Wesentlichen in radialer Richtung R des Strahltriebwerks 1 erstreckenden Vorsprungs 33 ist. Die weitere Abstützfläche 32 ist dabei ebenfalls in einer Ebene im Wesentlichen senkrecht zu der axialen Richtung A des Strahltriebwerks 1 angeordnet, wobei eine Oberfläche eines die weitere Abstützfläche 32 aufweisenden Teils des Vorsprungs 33 entgegen der Strömungsrichtung A gerichtet ist.

Das Sicherungssegment 23 ist in dem radial inneren Bereich weiterhin mit einer zusätzlichen Wirkfläche 35 ausgeführt, die im Wesentlichen konzentrisch zu der Zentralachse 16 des Strahltriebwerks 1 angeordnet ist, wobei eine Oberfläche eines die zusätzliche Wirkfläche 35 aufweisenden Teils des Sicherungssegments 23 in radialer Richtung R des Strahltriebwerks 1 nach außen gewandt ist. In montiertem Zustand der Sicherungsvorrichtung 22 wirkt das Sicherungssegment 23 über die zusätzliche Wirkfläche 35 mit einer zusätzlichen Abstützfläche 38 des Scheibenrads 17 zusammen, die ebenfalls im Wesentlichen konzentrisch zu der Zentralachse 16 des Strahltriebwerks 1 ausgeführt und im Bereich der Ausnehmung 24 von dem Scheibenrad 17 gebildet ist. Eine Oberfläche des die zusätzliche Abstützfläche 38 aufweisenden Teils des Scheibenrads 17 ist dabei im Wesentlichen bezüglich der radialen Richtung R des Strahltriebwerks 1 nach innen gerichtet.

Sowohl der Sprengring 26 als auch das Sicherungssegment 23 weisen jeweils zwei Flächen 40, 41 bzw. 42, 43 auf, über die die beiden Elemente miteinander zusammenwirken. Die Flächen 40 und 41 liegen dabei jeweils in einer im Wesentlichen senkrecht zu der axialen Richtung A des Strahltriebwerks 1 verlaufenden Ebene, während die Flächen 42 und 43 im Wesentlichen konzentrisch zu der Zentralachse 16 des Strahltriebwerks 1 angeordnet sind, so dass sich das Sicherungssegment 23 über die Fläche 40 in axialer Richtung A des Strahltriebwerks 1 an dem Sprengring 26 und über dessen Wirkfläche 27 an dem Scheibenrad 17 abstützt.

Über die Fläche 43 wird das Sicherungssegment 23 dagegen von dem Sprengring 26 entgegen einer Bewegung in radialer Richtung R des Strahltriebwerks 1 nach innen gehindert, so dass hierdurch verhindert ist, dass das Sicherungssegment 23 bei nicht drehender Rotorvorrichtung 10B mit seinem radial äußeren Bereich außer Eingriff mit der Nut 25 kommt und somit sicher sowohl an dem Scheibenrad 17 als auch an den Laufschaufeln 18 gehalten ist.

Das Sicherungssegment 23 weist weiterhin einen Abstützbereich 45 mit einer Nase 46 auf, über die das Sicherungssegment 23 in axialer Richtung A des Strahltriebwerks 1 mit wenigstens einer Laufschaufel 18 zusammenwirkt.

Mit der Sicherungsvorrichtung 22 sind die Laufschaufeln 18 vorteilhafterweise sowohl gegen eine Bewegung in Strömungsrichtung bzw. Axialrichtung A als auch gegen eine Bewegung entgegen der Strömungsrichtung an dem Scheibenrad 17 gesichert. Werden die Laufschaufeln 18 durch eine äußere Krafteinwirkung in Axialrichtung A gegenüber dem Scheibenrad 17 beaufschlagt, stützen sich die Sicherungssegmente 23 mittels eines in radialer Richtung R des Strahltriebwerks 1 sich von dem Abstützbereich 45 bis zu dem inneren Bereich der Sicherungssegmente 23 erstreckenden Hebels über Scherung an dem Scheibenrad 17 ab. Werden die Laufschaufeln 18 hingegen durch eine äußere Krafteinwirkung entgegen der Axialrichtung A gegenüber dem Scheibenrad 17 beaufschlagt, stützen sich die Sicherungssegmente 23 mittels eines in radialer Richtung R des Strahltriebwerks 1 sich von dem Abstützbereich 45 bis zu dem äußeren Bereich der Sicherungssegmente 23 ersteckenden Hebels über Scherung an den Laufschaufeln 18 ab.

Wenn der Abstützbereich 45 in einem bezüglich der radialen Richtung R des Strahltriebwerks 1 zwischen dem inneren Bereich und dem äußeren Bereich des Sicherungssegments 23 im Wesentlichen mittigen Bereich angeordnet ist, sind die beiden Hebel etwa gleich lang, so dass über die Sicherungssegmente 23 eine Bewegung der Laufschaufeln 18 in und entgegen der Axialrichtung A gut abgestützt werden kann.

Zur Montage der Sicherungsvorrichtung 22 an dem Scheibenrad 17 und den Laufschaufeln 18 wird zunächst ein Durchmesser des in Umfangsrichtung mit einer Öffnung ausgeführten Sprengrings 26 aufgeweitet, so dass der Sprengring 26 über den Vorsprung 29 in die Ausnehmung 24 an dem Scheibenrad 17 eingebracht werden kann, wobei der Sprengring 26 mit einem gegenüber einem Durchmesser in fertig montiertem Zustand verkleinerten Durchmesser in der Ausnehmung 24 gehalten wird. Anschließend werden die Sicherungssegmente 23 mit ihren radial äußeren Bereichen in Eingriff mit den Nuten 25 der sich noch nicht in Eingriff mit den Ausnehmungen 20 des Scheibenrads 17 befindlichen Laufschaufeln 18 gebracht.

Bei einer im Wesentlichen in axialer Richtung A des Strahltriebwerks 1 durchgeführten Einführung der Laufschaufeln 18 in die Ausnehmungen 20 des Scheibenrads 17 werden auch die Sicherungssegmente 23 in die Ausnehmung 24 des Scheibenrads 17 eingeführt und in radialer Richtung R des Strahltriebwerks 1 über den Sprengring 26 geführt. Anschließend wird ein Durchmesser des Sprengrings 26 vergrößert, so dass die Sicherungssegmente 23 über ihre Flächen 40, 42 mit den Flächen 41, 43 des Sprengrings 26 und mit der zusätzlichen Wirkfläche 35 mit der zusätzlichen, zweiten Abstützfläche 38 des Scheibenrads 17 und der Springring über seine Wirkfläche 27 mit der Abstützfläche 28 des Scheibenrads 17 zusammenwirken.

Grundsätzlich ist es dabei auch denkbar, dass die Sicherungssegmente 23 erst bei bereits in den Ausnehmungen 20 des Scheibenrads 17 montierten Laufschaufeln 17 in die Ausnehmung 24, in die der Sprengring 26 bereits eingebracht ist, eingesetzt werden.

Bei der in Fig. 3a gezeigten Ausführungsalternative weist die Sicherungsvorrichtung 22 mehrere, vorzugsweise etwa vier oder fünf im Wesentlichen baugleich ausgeführte Sicherungssegmente 23' auf, die hinsichtlich ihres Aufbaus und ihrer Wirkflächen im Prinzip wie die in Fig. 3 gezeigten Sicherungssegmente 23 ausgeführt sind. Im Unterschied zu der Ausführung nach sind. 3 ist hier der Vorsprung 33' der Laufschaufel 18 mit der Nut 25 und die zum Zusammenwirken mit der weiteren Wirkfläche 31 an dem Vorsprung 33' ausgebildete weitere Abstützfläche Teil einer Ummantelung eines als Mikroturbine ausgebildeten Kühlluftauslasses 34. Entsprechend dessen radialer Anordnung im radial inneren Bereich der Laufschaufel 18 ist das jeweilige Sicherungssegment 23' radial verkürzt ausgebildet.

Derartige Kühlluftauslässe 34 sind zur Strömungsdruckerhöhung beim Austritt der Kühlluft aus einem axialen Kühlluftkanal der Laufschaufel 18 beispielsweise mit einer diffusorartigen Erweiterung in Strömungsrichtung A ausgebildet und können je nach Anwendungsfall mit einer Strömungsumlenkung ausgebildet sein.

In weiteren Ausführungen ist es auch denkbar, dass der die Mikroturbine bildende Vorsprung 33' auch als separates Bauteil mit geeigneter Befestigung an der Laufschaufel 18 ausgebildet ist, wobei der Eingriff der Sicherungssegmente 23' in analoger Weise vorgesehen ist.

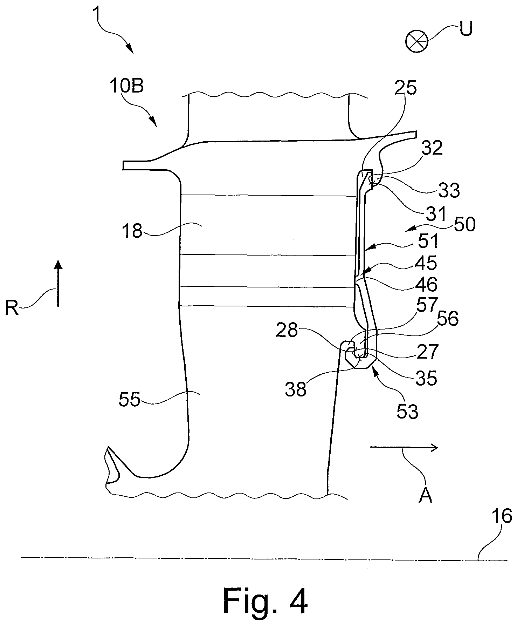

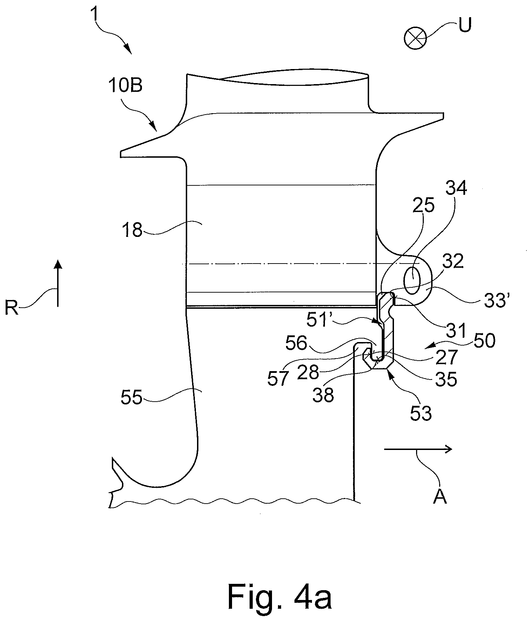

In Fig. 4 ist eine alternativ ausgeführte Sicherungsvorrichtung 50 mit Sicherungssegmenten 51 gezeigt, die in vergleichbarer Weise wie die Sicherungssegmente 23 im Bereich der Nut 25 und über den Abstützbereich 45 mit den Laufschaufeln 18 zusammenwirken. Die Sicherungssegmente 51 sind somit in einem radial mittigen und äußeren Bereich vergleichbar zu den Sicherungssegmenten 23 der Sicherungsvorrichtung 22 ausgeführt. In einem radial inneren Bereich weisen die Sicherungssegmente 51 einen hakenförmigen Bereich 53 auf, der in montiertem Zustand der Sicherungssegmente 51 mit einem im Anbindungsbereich alternativ zu dem Scheibenrad 17 ausgeführten Scheibenrad 55 zusammenwirkt.

Das Scheibenrad 55 weist hierzu im Unterschied zu dem Scheibenrad 17 keine Ausnehmung 24, sondern einen in Umfangsrichtung U des Strahltriebwerks 1 umlaufenden nasenförmig ausgebildeten Vorsprung 56 auf, durch den eine im Wesentlichen in radialer Richtung R des Strahltriebwerks 1 nach innen geöffnete Nut 57 gebildet wird.

In montiertem Zustand der Sicherungssegmente 51 umgreifen diese mit dem hakenförmigen Bereich 53 den Vorsprung 56 und greifen in die Nut 57 des Scheibenrads 55 ein. Die Sicherungssegmente 51 sind somit in radialer Richtung R des Strahltriebwerks 1 innerhalb des Vorsprungs 56 angeordnet, wobei der hakenförmige Bereich 53 in dem den Vorsprung 56 untergreifenden Bereich die im Wesentlichen konzentrisch zu der Triebwerksachse 12 angeordnete zusätzliche Wirkfläche 35 aufweist, die zum Zusammenwirken mit der von dem Vorsprung 56 gebildeten zusätzlichen Abstützfläche 38 ausgebildet ist, die in radialer Richtung R des Strahltriebwerks 1 nach innen weist und ebenfalls im Wesentlichen konzentrisch zu der Triebwerksachse 12 ausgeführt ist.

Die Wirkfläche 27 ist dabei von dem den Vorsprung 56 umgreifenden und in die Nut 57 des Scheibenrads 55 eingreifenden Teil des hakenförmigen Bereichs 53 gebildet und wirkt mit der von dem Vorsprung 56 gebildeten Abstützfläche 28 zusammen.

Die Sicherungssegmente 51 können auf einfache Weise bei bereits in den Ausnehmungen 20 des Scheibenrads 55 angeordneten Laufschaufeln 18 radial von innen nach außen in Eingriff einerseits mit den Nuten 25 der Laufschaufeln 18 und andererseits mit dem Vorsprung 56 des Scheibenrads 55 gebracht werden.

Zur spielfreien Positionierung der Sicherungssegmente 23, 51 in den Nuten 25 der Laufschaufeln 18 und in der Ausnehmung 24 des Scheibenrads 17 bzw. im Bereich des Vorsprungs 56 des Scheibenrads 55 können die Sicherungssegmente 23 bzw. 51 durch eine elastische Verformung bei der Montage bei entsprechender Auslegung der Axialtoleranzen vorgespannt angeordnet werden.

Bei der in Fig. 4a gezeigten Ausführungsalternative weist die Sicherungsvorrichtung 22 wiederum mehrere im Wesentlichen baugleich ausgeführte Sicherungssegmente 51' auf, die hinsichtlich ihres Aufbaus und ihrer Wirkflächen im Prinzip wie die in Fig. 4 gezeigten Sicherungssegmente 51 aufgebaut sind. Wie bei der in Fig. 3a gegenüber der Ausführung in Fig. 3 gezeigten Ausgestaltungsvariante handelt es sich bei der in Fig. 4a ersichtlichen Ausgestaltungsalternative um eine Modifikation der Ausführung nach Fig. 4 bei einer Laufschaufel 18 mit einem Vorsprung 33', der Teil einer Ummantelung eines als Mikroturbine ausgebildeten Kühlluftauslasses 34 ist. Wie bei der Ausführung nach Fig. 3a ist die weitere Abstützfläche 32 im Bereich des Kühlluftauslasses 34 angeordnet, wobei die jeweiligen Sicherungssegmente 51' in ihrer radialen Erstreckung entsprechend verkürzt ausgebildet sind.

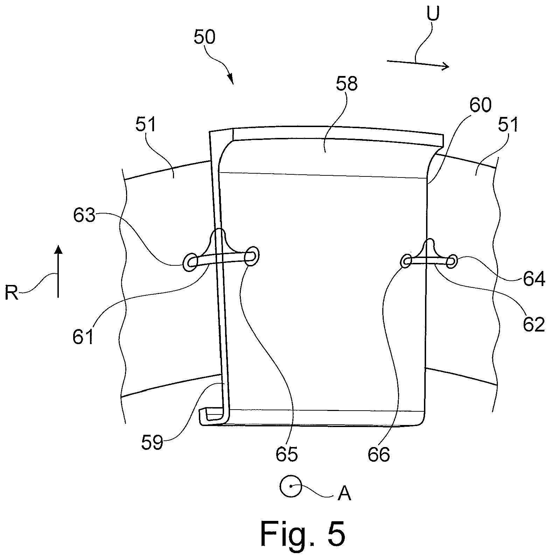

In Fig. 5 ist ein stark vereinfachter Ausschnitt der Sicherungsvorrichtung 50 in axialer Richtung A des Strahltriebwerks 1 betrachtet ersichtlich. Die Sicherungsvorrichtung 50 weist im Wesentlichen baugleiche Sicherungssegmente 51 auf, die mit insbesondere in radialer Richtung R des Strahltriebwerks 1 verlaufenden Seitenflächen ausgeführt sind. Über die Seitenflächen wirken in Umfangsrichtung U des Strahltriebwerks 1 benachbarte Sicherungssegmente 51 miteinander zusammen.

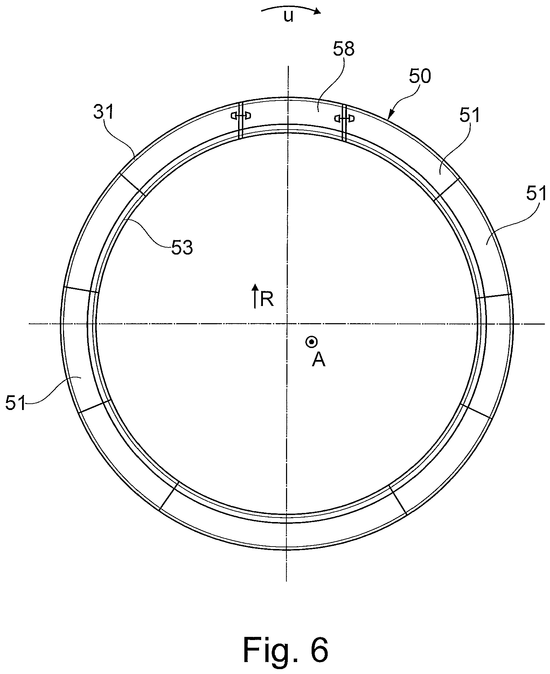

Wie in Fig. 5 und Fig. 6 ersichtlich ist, weist die Sicherungsvorrichtung 50 aus Montagegründen vorliegend ein Sicherungssegment 58 auf, das mit zwei zueinander parallel ausgeführten, in Umfangsrichtung U des Strahltriebwerks 1 weisenden Seitenflächen 59, 60 ausgebildet ist. Hierdurch kann das Sicherungssegment 58 nach der Montage aller anderen Sicherungssegmente 51 auf einfache Weise in Wirkverbindung mit den jeweils benachbarten Sicherungssegmenten 51 gebracht werden.

Um das Sicherungssegment 58 in der montierten Position sicher zu halten, sind vorliegend zwei Halteeinrichtungen 61, 62 vorgesehen. Über die jeweilige Halteeinrichtung 61, 62 ist das Sicherungssegment 58 unverlierbar mit dem jeweils in Umfangsrichtung U des Strahltriebwerks 1 benachbarten Sicherungssegment 51 verbindbar. Die Halteeinrichtungen 61, 62 sind vorliegend als zu deformierender Draht oder Blechstreifen ausgeführt, der jeweils durch eine Ausnehmung 63 bzw. 64 des Sicherungssegments 51 und eine Ausnehmung 65 bzw. 66 des Sicherungssegments 58 geführt ist.

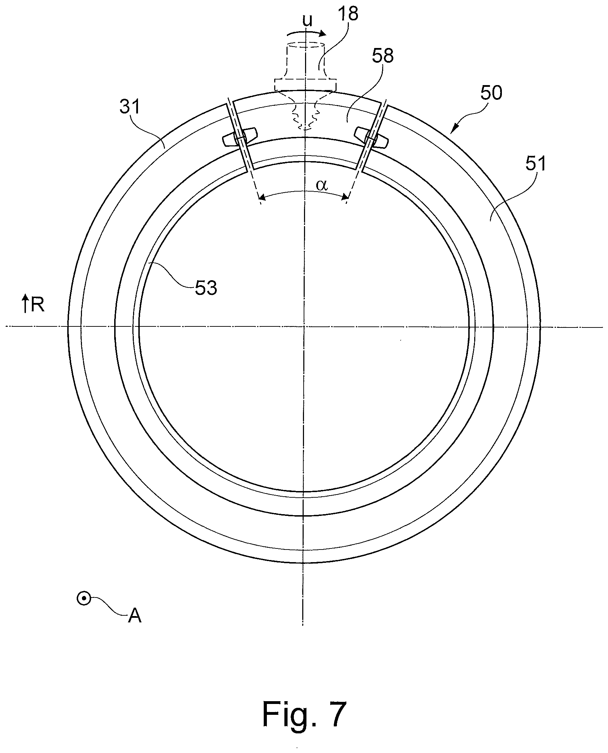

Im Unterschied zu der Ausführung nach Fig. 5 und Fig. 6 mit zahlreichen Sicherungssegmenten ist bei der in Fig. 7 gezeigten Ausführung ein zweiteiliger Ring als Sicherungsvorrichtung 22 bzw. 50 vorgesehen, bei der die Sicherungsvorrichtung in der Art eines Sprengrings mit einem Schlusssegment 58 ausgebildet ist, wobei die Spalte zwischen dem Schlusssegment 58 und dem als Restring verbleibenden Sicherungssegment 51 zu einem Ringmittelpunkt hin ausgerichtet sind und einen Winkel α innerhalb eines Kreisquadranten einschließen.

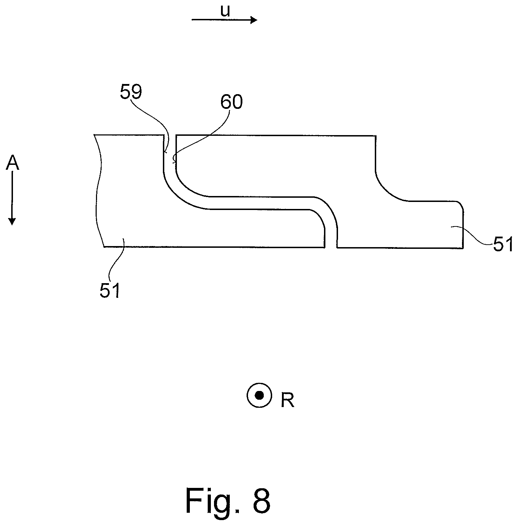

Bei jeder Ausführung können Leckagen im Spaltbereich zwischen den Segmenten der Sicherheitsvorrichtung 50 minimiert werden, wenn die Seitenflächen 59, 60 der einzelnen Segmente 51, 58 sich im Spaltbereich axial überlappen, wie dies in Fig. 8 ersichtlich ist.

### Bezugszeichenliste

- 1: Strömungsmaschine; Strahltriebwerk
- 2: Nebenstromkanal
- 3: Einlaufbereich
- 4: Bläser
- 5: Kernstromkanal
- 6: Verdichtereinrichtung
- 7: Brenner
- 8: Turbineneinrichtung
- 9A, 9B: Rotorvorrichtung (Hochdruck)
- 10A, 10B, 10C: Rotorvorrichtung (Niederdruck)
- 11: Triebwerkswelle (Hochdruck)
- 12: Triebwerkswelle (Niederdruck)
- 13: Statorvorrichtung
- 14: zweite Stufe der Turbineneinrichtung
- 16: Zentralachse
- 17: Scheibenrad
- 18: Laufschaufel
- 19: Schaufelfuß
- 20: Ausnehmungen des Scheibenrads
- 22: Sicherungsvorrichtung
- 23, 23': Sicherungssegment
- 24: Ausnehmung des Scheibenrads
- 25: Nut der Laufschaufel
- 26: Sicherungselement; Sprengring
- 27: Wirkfläche
- 28: erste Abstützfläche
- 29: Vorsprung des Scheibenrads
- 31: weitere Wirkfläche
- 32: weitere Abstützfläche
- 33, 33': Vorsprung der Laufschaufel
- 34: Kühlluftauslass
- 35: zusätzliche Wirkfläche
- 38: zusätzliche, zweite Abstützfläche
- 40, 42: Fläche des Sicherungssegments
- 41, 43: Fläche des Sprengrings
- 45: Abstützbereich
- 46: Nase (Abstützleiste)
- 50: Sicherungsvorrichtung
- 51, 51': Sicherungssegment
- 53: hakenförmiger Bereich
- 55: Scheibenrad
- 56: Vorsprung
- 57: Nut
- 58: Sicherungssegment
- 59, 60: Seitenfläche des Sicherungssegments
- 61, 62: Halteeinrichtung
- 63, 64, 65, 66: Ausnehmung
- A: axiale Richtung des Strahltriebwerks
- R: radiale Richtung des Strahltriebwerks
- U: Umfangsrichtung des Strahltriebwerks

## Patentansprüche

1. Sicherungsvorrichtung (22, 50) zur axialen Sicherung wenigstens einer Laufschaufel (18) an einem Scheibenrad (17, 55) einer Rotorvorrichtung (9A, 9B, 10A, 10B, 10C) einer Strömungsmaschine (1) mit mehreren in montiertem Zustand in axialer Richtung (A) der Rotorvorrichtung (9A, 9B, 10A, 10B, 10C) in und entgegen einer Strömungsrichtung eines Arbeitsgases sichernden Sicherungssegmenten (23, 23', 51, 51'), wobei die Sicherungsvorrichtung (22, 50) wenigstens eine in einem radial inneren Bereich angeordnete Wirkfläche (27), die in montiertem Zustand zum Zusammenwirken mit dem Scheibenrad (17, 55) in axialer Richtung (A) der Rotorvorrichtung (9A, 9B, 10A, 10B, 10C) ausgeführt ist, aufweist, und wobei wenigstens ein Sicherungssegment (23, 23', 51, 51') eine zusätzliche Wirkfläche (35) aufweist, die in montiertem Zustand zum Zusammenwirken mit dem Scheibenrad (17, 55) in radialer Richtung (R) der Rotorvorrichtung (9A, 9B, 10A, 10B, 10C) ausgeführt ist, und wobei das wenigstens eine Sicherungssegment (23, 51) einen Abstützbereich (45) aufweist, der in montiertem Zustand zum Zusammenwirken mit einer Laufschaufel (18) der Rotorvorrichtung (9A, 9B, 10A, 10B, 10C) ausgeführt ist,
**dadurch gekennzeichnet, dass** die Sicherungsvorrichtung (22, 50) eine weitere in einem radial äußeren Bereich an einem Sicherungssegment (23, 23', 51, 51') angeordnete Wirkfläche (31), die in montiertem Zustand zum Zusammenwirken mit wenigstens einer Laufschaufel (18) in axialer Richtung (A) der Rotorvorrichtung (9A, 9B, 10A, 10B, 10C) gegen eine Bewegung der Laufschaufel (18) an dem Scheibenrad (17, 55) entgegen der Strömungsrichtung ausgeführt ist, aufweist.

2. Sicherungsvorrichtung nach Anspruch 1, **dadurch gekennzeichnet, dass** die zusätzliche Wirkfläche (35) an dem wenigstens einen Sicherungssegment (23, 23', 51, 51') in montiertem Zustand im Wesentlichen konzentrisch zu einer Mittelachse (16) der Rotorvorrichtung (9A, 9B, 10A, 10B, 10C) angeordnet ist.

3. Sicherungsvorrichtung nach einem der Ansprüche 1 oder 2, **dadurch gekennzeichnet, dass** die in axialer Richtung (A) weisenden Wirkflächen (27, 31) in montiertem Zustand der Sicherungsvorrichtung (22, 50) im Wesentlichen parallel zu einer senkrecht zu einer Mittelachse (16) der Rotorvorrichtung (9A, 9B, 10A, 10B, 10C) verlaufenden Ebene ausgebildet sind.

4. Sicherungsvorrichtung nach einem der Ansprüche 1 bis 3, **dadurch gekennzeichnet, dass** der Abstützbereich (45) in montiertem Zustand in einem bezüglich der radialen Richtung (R) der Rotorvorrichtung (9A, 9B, 10A, 10B, 10C) mittigen Bereich des Sicherungssegments (23, 51) angeordnet ist.

5. Sicherungsvorrichtung nach einem der Ansprüche 1 bis 4, **dadurch gekennzeichnet, dass** diese ein Sicherungselement (26) umfasst, das die in montiertem Zustand mit dem Scheibenrad (17, 55) in axialer Richtung (A) zusammenwirkende Wirkfläche (27) aufweist und in montiertem Zustand in radialer Richtung (R) und/oder axialer Richtung (A) der Rotorvorrichtung (9A, 9B, 10A, 10B, 10C) mit dem wenigstens einen zugeordneten Sicherungssegment (23, 23') zusammenwirkt.

6. Sicherungsvorrichtung nach einem der Ansprüche 1 bis 5, **dadurch gekennzeichnet, dass** das wenigstens eine Sicherungssegment (51, 51') in einem radial inneren Bereich einen sich in axialer Richtung (A) erstreckenden hakenförmigen Bereich (53) aufweist, wobei die in montiertem Zustand mit dem Scheibenrad (17, 55) in axialer Richtung (A) zusammenwirkende Wirkfläche (27) an einer Innenwandung des hakenförmigen Bereichs (53) ausgebildet ist.

7. Rotorvorrichtung (9A, 9B, 10A, 10B, 10C) für eine Strömungsmaschine (1) mit einem Scheibenrad (17, 55) und mehreren umfangsseitig verteilt an dem Scheibenrad (17, 55) angeordneten Laufschaufeln (18), wobei die Laufschaufeln (18) jeweils über einen Schaufelfuß (19) in im Wesentlichen axialer Richtung (A) der Rotorvorrichtung (9A, 9B, 10A, 10B, 10C) verlaufenden Ausnehmungen (20) des Scheibenrades (17, 55) angeordnet sind, und wobei zur axialen Sicherung der Laufschaufeln (18) an dem Scheibenrad (17, 55) eine Sicherungsvorrichtung (22, 50) nach einem der Ansprüche 1 bis 6 mit mehreren umfangsseitig verteilt angeordneten Sicherungssegmenten (23, 23', 51, 51') vorgesehen ist.

8. Rotorvorrichtung nach Anspruch 7, **dadurch gekennzeichnet, dass** das Scheibenrad (17, 55) eine erste Abstützfläche (28) und eine zweite Abstützfläche (38) und die Laufschaufeln (18) eine weitere Abstützfläche (32) aufweisen, wobei die erste Abstützfläche (28) des Scheibenrads (17, 55) mit wenigstens einer in axialer Richtung (A) ausgerichteten Wirkfläche (27) der Sicherungsvorrichtung (22, 50), die zweite Abstützfläche (38) mit der zusätzlichen in radialer Richtung (R) ausgerichteten Wirkfläche (35) der Sicherungssegmente (23, 23', 51, 51') und die weitere Abstützfläche (32) mit der weiteren in axialer Richtung (A) ausgerichteten Wirkfläche (31) der Sicherungssegmente (23, 23', 51, 51') zusammenwirken.

9. Rotorvorrichtung nach Anspruch 8, **dadurch gekennzeichnet, dass** das Scheibenrad (17) eine Ausnehmung (24) aufweist, in deren Bereich die erste Abstützfläche (28) angeordnet ist.

10. Rotorvorrichtung nach einem der Ansprüche 8 oder 9, **dadurch gekennzeichnet, dass** das Scheibenrad (55) eine durch einen Vorsprung (56) gebildete Nut (57) aufweist, die in radialer Richtung (R) der Rotorvorrichtung (9A, 9B, 10A, 10B, 10C) nach innen geöffnet ist, wobei die erste Abstützfläche (28) des Scheibenrads (55) Teil der Nut (57) ist, und wobei der Vorsprung (56) insbesondere auch die zweite Abstützfläche (38) aufweist.

11. Rotorvorrichtung nach Anspruch 10, **dadurch gekennzeichnet, dass** die Sicherungssegmente (51, 51') den Vorsprung (56) des Scheibenrads (55) umgreifen.

12. Rotorvorrichtung nach einem der Ansprüche 7 bis 11, **dadurch gekennzeichnet, dass** die weitere Abstützfläche (32) an den Laufschaufeln (18) im Bereich eines eine Mikroturbine bildenden Kühlluftauslasses (34) angeordnet ist.

13. Rotorvorrichtung nach einem der Ansprüche 7 bis 12, **dadurch gekennzeichnet, dass** ein Sicherungssegment (23, 23', 51, 51') in Umfangsrichtung (U) der Rotorvorrichtung (9A, 9B, 10A, 10B, 10C) betrachtet zueinander parallel ausgeführte oder im Wesentlichen in radialer Richtung (R) der Rotorvorrichtung (9A, 9B, 10A, 10B, 10C) verlaufende Seitenflächen (59, 60) aufweist.

14. Rotorvorrichtung nach einem der Ansprüche 7 bis 13, **dadurch gekennzeichnet, dass** wenigstens eine Halteeinrichtung (61, 62) zur Halterung eines oder mehrerer Sicherungssegmente (23, 23', 51, 51') in seiner bzw. ihrer Position vorgesehen ist.

15. Rotorvorrichtung nach einem der Ansprüche 7 bis 14, **dadurch gekennzeichnet, dass** die Seitenflächen (59, 60) wenigstens zweier benachbarter Sicherungssegmente (23, 23', 51, 51') in einer sich im Spaltbereich axial überlappenden Bauart ausgeführt sind.

## Claims

1. Securing device (22, 50) for the axial securing of at least one rotor blade (18) at a disc wheel (17, 55) of a rotor device (9A, 9B, 10A, 10B, 10C) of a turbomachine (1) with multiple securing segments (23, 23', 51, 51') that in the mounted state provide securing in the axial direction (A) of the rotor device (9A, 9B, 10A, 10B, 10C) in and against a flow direction of a working gas, wherein the securing device (22, 50) has at least one effective area (27) that is arranged in a radially inner area and that is embodied for acting, in the mounted state, together with the disc wheel (17, 55) in the axial direction (A) of the rotor device (9A, 9B, 10A, 10B, 10C), and wherein at least one securing segment (23, 23', 51, 51') has an additional effective area (35) that is embodied for acting, in the mounted state, together with the disc wheel (17, 55) in the radial direction (R) of the rotor device (9A, 9B, 10A, 10B, 10C), and wherein the at least one securing segment (23, 51) has a support area (45) which is embodied for acting, in the mounted state, together with a rotor blade (18) of the rotor device (9A, 9B, 10A, 10B, 10C),
**characterized in that** the securing device (22, 50) has a further effective area (31) that is arranged in a radially outer area at a securing segment (23, 23', 51, 51') and that is embodied for acting, in the mounted state, together with at least one rotor blade (18) in the axial direction (A) of the rotor device (9A, 9B, 10A, 10B, 10C) against a movement of the rotor blade (18) at the disc wheel (17, 55) counter to a flow direction.

2. Securing device according to claim 1, **characterized in that** the additional effective area (35) at the at least one securing segment (23, 23', 51, 51') is arranged, in the mounted state, in a manner substantially concentric with respect to a central axis (16) of the rotor device (9A, 9B, 10A, 10B, 10C).

3. Securing device according to any of the claims 1 or 2, **characterized in that**, in the mounted state of the securing device (22, 50), the effective areas (27, 31) that are oriented in the axial direction (A) are configured so as to be substantially parallel to a plane that extends perpendicularly to the central axis (16) of the rotor device (9A, 9B, 10A, 10B, 10C).

4. Securing device according to any of the claims 1 to 3, **characterized in that**, in the mounted state, the support area (45) is arranged in an area of the securing segment (23, 51) that is central with respect to the radial direction (R) of the rotor device (9A, 9B, 10A, 10B, 10C).

5. Securing device according to any of the claims 1 to 4, **characterized in that** it comprises a securing element (26) that comprises the effective area (27), which in the mounted state acts together with the disc wheel (17, 55) in the axial direction (A), and which acts together in the mounted state with at least one associated securing segment (23, 23') in the radial direction (R) and/or the axial direction (A) of the rotor device (9A, 9B, 10A, 10B, 10C).

6. Securing device according to any of the claims 1 to 5, **characterized in that**, in a radially inner area, the at least one securing segment (51, 51') has a hook-shaped area (53) that extends in the axial direction (A), wherein the effective area (27) that in the mounted state acts together with the disc wheel (17, 55) in the axial direction (A) is configured at an inner wall of the hook-shaped area (53).

7. Rotor device (9A, 9B, 10A, 10B, 10C) for a turbomachine machine (1) with a disc wheel (17, 55) and multiple rotor blades (18) that are arranged at the disc wheel (17, 55) in a circumferentially distributed manner, wherein the rotor blades (18) are respectively arranged by means of a blade root (19) inside recesses (20) of the disc wheel (17, 55) that substantially extend in the axial direction (A) of the rotor device (9A, 9B, 10A, 10B, 10C), and wherein a securing device (22, 50) according to any of the claims 1 to 6 with multiple securing segments (23, 23', 51, 51') arranged in a circumferentially distributed manner is provided for the axial securing of the rotor blades (18) at the disc wheel (17, 55).

8. Rotor device according to claim 7, **characterized in that** the disc wheel (17, 55) has a first support surface (28) and a second support surface (38), and the rotor blades (18) have a further support surface (32), wherein the first support surface (28) of the disc wheel (17, 55) acts together with at least one effective area (27) of the securing device (22, 50) that is oriented in the axial direction (A), the second support surface (38) acts together with the additional effective area (35) of the securing segments (23, 23', 51, 51') that is oriented in the radial direction (R), and the further support surface (32) acts together with the further effective area (31) of the securing segments (23, 23', 51, 51') that is oriented in the axial direction (A).

9. Rotor device according to claim 8, **characterized in that** the disc wheel (17) has a recess (24), in the area of which the first support surface (28) is arranged.

10. Rotor device according to any of the claims 8 or 9, **characterized in that** the disc wheel (55) has a groove (57) that is formed by a projection (56) and that is open inwards in the radial direction (R) of the rotor device (9A, 9B, 10A, 10B, 10C), wherein the first support surface (28) of the disc wheel (55) is a part of the groove (57), and wherein the projection (56) in particular also comprises the second support surface (38).

11. Rotor device according to claim 10, **characterized in that** the securing segments (51, 51') surround the projection (56) of the disc wheel (55).

12. Rotor device according to any of the claims 7 to 11, **characterized in that** the further support surface (32) is arranged at the rotor blades (18) in the area of a cooling air outlet (34) that forms a microturbine.

13. Rotor device according to any of the claims 7 to 12, **characterized in that** a securing segment (23, 23', 51, 51') has lateral surfaces (59, 60) that are embodied so as to be parallel to each other or so as to substantially extend in the radial direction (R) of the rotor device (9A, 9B, 10A, 10B, 10C) as viewed in the circumferential direction (U) of the rotor device (9A, 9B, 10A, 10B, 10C).

14. Rotor device according to any of the claims 7 to 13, **characterized in that** at least one retaining appliance (61, 62) is provided for retaining one or multiple securing segments (23, 23', 51, 51') in its or their position.

15. Rotor device according to any of the claims 7 to 14, **characterized in that** the lateral surfaces (59, 60) of at least two adjacent securing segments (23, 23', 51, 51') are embodied in a design in which they axially overlap each other in the gap area.

## Revendications

1. Dispositif de sécurité (22, 50) pour la sécurisation axiale d'au moins une aube mobile (18) à une roue à disque (17, 55) d'une structure de rotor (9A, 9B, 10A, 10B, 10C) d'une machine à écoulement (1) avec plusieurs segments de sécurité (23, 23', 51, 51') qui, à l'état monté, sécurisent dans le sens axial (A) de la structure de rotor (9A, 9B, 10A, 10B, 10C) dans le sens de l'écoulement et dans le sens inverse de l'écoulement d'un gaz de travail, sachant que le dispositif de sécurité (22, 50) présente au moins une surface active (27) disposée dans une zone radialement intérieure et qui est conçue pour interagir à l'état monté avec la roue à disque (17, 55) dans le sens axial (A) de la structure de rotor (9A, 9B, 10A, 10B, 10C), et sachant qu'au moins un segment de sécurité (23, 23', 51, 51') présente une surface active supplémentaire (35), qui est conçue pour interagir à l'état monté avec la roue à disque (17, 55) dans le sens radial (R) de la structure de rotor (9A, 9B, 10A, 10B, 10C) et sachant que ledit au moins un segment de sécurité (23, 51) présente une zone d'appui (45), qui est conçue pour interagir à l'état monté avec une aube mobile (18) de la structure de rotor (9A, 9B, 10A, 10B, 10C), **caractérisé en ce que** le dispositif de sécurité (22, 50) présente une autre surface active (31) disposée dans une zone radialement extérieure sur un segment de sécurité (23, 23', 51, 51') et conçue pour interagir à l'état monté avec au moins une aube mobile (18) dans le sens axial (A) de la structure de rotor (9A, 9B, 10A, 10B, 10C) à l'encontre d'un mouvement de l'aube mobile (18) sur la roue à disque (17, 55) dans le sens inverse de l'écoulement.

2. Dispositif de sécurité selon la revendication n° 1, **caractérisé en ce que** la surface active supplémentaire (35) sur ledit au moins un segment de sécurité (23, 23', 51, 51') est disposée à l'état monté essentiellement concentriquement par rapport à un axe médian (16) de la structure de rotor (9A, 9B, 10A, 10B, 10C).

3. Dispositif de sécurité selon une des revendications n° 1 ou n° 2, **caractérisé en ce que** les surfaces actives (27, 31) pointant dans le sens axial (A) sont conçues, à l'état monté du dispositif de sécurité (22, 50), essentiellement parallèlement à un plan s'étendant perpendiculairement à un axe médian (16) de la structure de rotor (9A, 9B, 10A, 10B, 10C).

4. Dispositif de sécurité selon une des revendications n° 1 à n° 3, **caractérisé en ce que** la zone d'appui (45) est disposée à l'état monté dans une zone du segment de sécurité (23, 51) qui est médiane par rapport au sens radial (R) de la structure de rotor (9A, 9B, 10A, 10B, 10C).

5. Dispositif de sécurité selon une des revendications n° 1 à n° 4, **caractérisé en ce que** celui-ci comprend un élément de sécurité (26) qui présente la surface active (27) interagissant à l'état monté avec la roue à disque (17, 55) dans le sens axial (A), et qui interagit à l'état monté dans le sens radial (R) et/ ou dans le sens axial (A) de la structure de rotor (9A, 9B, 10A, 10B, 10C) avec ledit au moins un segment de sécurité (23, 23') associé.

6. Dispositif de sécurité selon une des revendications n° 1 à n° 5, **caractérisé en ce que** ledit au moins un segment de sécurité (51, 51') présente, dans une zone radialement intérieure, une zone en forme de crochet (53) s'étendant dans le sens axial (A), sachant que la surface active (27), qui interagit à l'état monté avec la roue à disque (17, 55) dans le sens axial (A), est constituée sur une paroi intérieure de la zone en forme de crochet (53).

7. Structure de rotor (9A, 9B, 10A, 10B, 10C) pour une machine à écoulement (1) avec une roue à disque (17, 55) et plusieurs aubes mobiles (18) réparties sur la roue à disque (17, 55) côté circonférence, sachant que les aubes mobiles (18) sont disposées, chacune par le biais d'un pied d'aube (19), dans des évidements (20) de la roue à disque (17, 55), s'étendant essentiellement dans le sens axial (A) de la structure de rotor (9A, 9B, 10A, 10B, 10C), et sachant qu'un dispositif de sécurité (22, 50) selon une des revendications n° 1 à n° 6, pourvu de plusieurs segments de sécurité (23, 23', 51, 51') répartis côté circonférence, est prévu sur la roue à disque (17, 55) pour assurer la sécurisation axiale des aubes mobiles (18).

8. Structure de rotor selon la revendication n° 7, **caractérisée en ce que** la roue à disque (17, 55) présente une première surface d'appui (28) et une seconde surface d'appui (38) et que les aubes mobiles (18) présentent une autre surface d'appui (32), sachant que la première surface d'appui (28) de la roue à disque (17, 55) interagit avec au moins une surface active (27) du dispositif de sécurité (22, 50), dirigée dans le sens axial (A), que la seconde surface d'appui (38) interagit avec la surface active supplémentaire (35) des segments de sécurité (23, 23', 51, 51'), dirigée dans le sens radial (R), et que l'autre surface d'appui (32) interagit avec l'autre surface active (31) des segments de sécurité (23, 23', 51, 51'), dirigée dans le sens axial (A).

9. Structure de rotor selon la revendication n° 8, **caractérisée en ce que** la roue à disque (17) présente un évidement (24), dans la zone duquel est disposée la première surface d'appui (28).

10. Structure de rotor selon une des revendications n° 8 ou n° 9, **caractérisée en ce que** la roue à disque (55) présente une rainure (57) formée par une saillie (56), qui est ouverte vers l'intérieur dans le sens radial (R) de la structure de rotor (9A, 9B, 10A, 10B, 10C), sachant que la première surface d'appui (28) de la roue à disque (55) fait partie de la rainure (57) et sachant que la saillie (56) présente notamment aussi la seconde surface d'appui (38).

11. Structure de rotor selon la revendication n° 10, **caractérisée en ce que** les segments de sécurité (51, 51') enveloppent la saillie (56) de la roue à disque (55).

12. Structure de rotor selon une des revendications n° 7 à n° 11, **caractérisée en ce que** l'autre surface d'appui (32) est disposée sur les aubes mobiles (18) au niveau d'une sortie d'air de refroidissement (34) formant une microturbine.

13. Structure de rotor selon une des revendications n° 7 à n° 12, **caractérisée en ce qu'**un segment de sécurité (23, 23', 51, 51') observé dans le sens circonférentiel (U) de la structure de rotor (9A, 9B, 10A, 10B, 10C) présente des surfaces latérales (59, 60) s'étendant parallèlement les unes aux autres ou essentiellement dans le sens radial (R) de la structure de rotor (9A, 9B, 10A, 10B, 10C).

14. Structure de rotor selon une des revendications n° 7 à n° 13, **caractérisée en ce qu'**est prévu au moins un dispositif de retenue (61, 62) servant à fixer un ou plusieurs segments de sécurité (23, 23', 51, 51 ') dans sa ou leur position.

15. Structure de rotor selon une des revendications n° 7 à n° 14, **caractérisée en ce que** les surfaces latérales (59, 60) d'au moins deux segments de sécurité (23, 23', 51, 51') adjacents sont conçues se chevauchant axialement dans la zone de la fente.
